# EUROPEAN PATENT SPECIFICATION

(11) **EP 3 766 326 B1**
(45) Date of publication and mention of the grant of the patent: **20.04.2022**
(21) Application number: 19204648.0
(22) Date of filing: 22.10.2019
(51) Int. Cl.: A01D 34/416

(54) **A MOWER WIRE BOX WITH A TAKE-UP STRUCTURE**
MÄHDRAHTKASTENS MIT EINEM AUFNAHMESTRUKTUR
BOÎTE DE FILS DE TONDEUSE AVEC UNE STRUCTURE D'ENROULEMENT

(30) Priority: 17.07.2019 CN 201910643301
(43) Date of publication of application: 20.01.2021
(73) Proprietor: Suzhou Yuyuan Machinery Co., Ltd, Jiangsu Province, Suzhou 215107 (CN)
(72) Inventor: QIN, Guirong, SUZHOU, Jiangsu 215107 (CN)
(74) Representative: EP&C

(56) References cited:
- WO-A1-2014/041316
- KR-Y1- 200 453 320
- US-A1- 2005 217 120
- US-A1- 2015 271 992
- US-A1- 2017 347 523

## Description

### TECHNICAL FIELD

The present invention relates to the field of mower structure, in particular to a mower wire box with a take-up structure.

### BACKGROUND

A mower, also called a weeder, a lawnmower, a lawn trimmer, etc., is mainly used for mowing lawns and the like. The working head of the mower mainly comprises two parts, a motor and a mowing device. The mowing device is divided into two types, a rigid cutter head and a flexible cutting line. The cutter head uses a blade for mowing, while the flexible cutting line cuts the grass with the cutting force generated by the cutting line when it rotates at high speed. Both the blade and the cutting line will be worn out after a period of use. After being worn, the blade can be replaced, while the cutting line will become shorter. It is necessary to pull the cutting line from the wire reel to the appropriate working length for effective use. Since the cutting line may wear out faster than the blade, when the grass is cut by a mowing device with the flexible cutting line wrapped on the wire reel, the cutting line has to be pulled out frequently to ensure the working length of the cutting line and keep the best working state of the mower, which will bring great trouble to the operator.

In the prior art, an automatic casting-out structure is usually used to automatically extend the cutting line, which is based on the principle that the cutting line is extended out by a centrifugal force generated by the rotation of the wire reel. In the wire reel structure, the automatic casting-out can be realized based on the ratchet mechanism together with the damping force. However, the degree of wear of the cutting line is different during actual use. Therefore, automatic casting-out can only be implemented smoothly under relatively ideal wear conditions. Moreover, the durability of the structure also has a great impact on the automatic casting-out. Therefore, the simple automatic casting-out structure cannot ensure the normal casting-out of the mower.

An example of a take-up structure of a mower wire box is shown and described in US-2015/271992.

### SUMMARY

The technical solution of the present invention is a mower wire box with a take-up structure, which comprises a wire box, a casting-out cover, and a wire reel arranged in the wire box. The wire box is provided inside with a supporting portion for rotating support, with which the wire reel is matched through its shaft hole. Based on this match, the wire reel can rotate in the wire box.

A pair of elastic ribs, disposed on the peripheral wall of the supporting portion, is provided on the outer wall with a first rib extending axially. A second rib is disposed in the shaft hole of the wire reel. The elastic ribs are spread out by the centrifugal force, and the first rib and the second rib frictionally cooperate to form damping to achieve stable casting-out. During casting-out, the elastic ribs of the supporting portion are spread out by the centrifugal force, and the first rib of the elastic rib frictionally cooperates with the second rib in the shaft hole of the wire reel to form damping.

A convex shaft is protruded from a lower end surface of the wire reel, and an auxiliary rib is disposed on an outer circumferential surface of the convex shaft. Accordingly, a convex ring corresponding to the convex shaft is arranged in the casting-out cover, with the auxiliary rib in contact with the upper end surface of the convex ring.

A ratchet assembly, arranged on the bottom surface of the wire box, can provide one-way rotation locking for the wire reel. The ratchet assembly is divided into an automatic casting-out assembly and a manual casting-out assembly, the automatic casting-out assembly being based on the cooperation of the damping force and the ratchet, the manual casting-out assembly being realized by the mechanical transmission of the ratchet.

The wire reel is provided with an inner ring gear and an outer ring gear in coaxial relationship. The automatic casting-out assembly includes a first spring that presses a first pawl to the outer ring gear, and the manual casting-out assembly includes a second spring that presses a second pawl to the inner ring gear.

Further, the first pawl includes a curved claw; the first spring, fixed on the bottom surface of the wire box, presses the claw to the outer ring gear. When the cutting line becomes shorter due to wear, the mowing resistance is reduced, the motor speed is increased, and the corresponding centrifugal force is also increased. Under the action of the centrifugal force, the claw overcomes the elastic force of the first spring to leave the ratchet, while the wire reel will automatically rotate by one tooth under the pull of the centrifugal force of the cutting line, so that the cutting line is extended to ensure the working length thereof.

Further, a rotating shaft is fitted in the central shaft hole of the supporting portion, and a rear end of the second pawl is connected to the rotating surface of the rotating shaft; a torsion spring is disposed between the rotating shaft and the central shaft hole; a curved chute, whose length is greater than a single pitch of the inner ring gear, is arranged on the bottom surface of the wire box; a protrusion matched with the chute is disposed on the second pawl. When the automatic casting-out structure cannot work properly, the second pawl can be driven to shift by the rotating shaft that is rotated. Since the rotation angle of the second pawl is limited, the second pawl can only rotate by one inner pitch. Then, with the torsion spring reset, the wire reel can be rotated forward by one inner pitch to achieve the effect of manual casting-out.

Further, the end of the rotating shaft is located outside the wire box, and a hexagonal surface is provided on the end of the rotating shaft to fit a manual wrench.

According to the inventive thought, the second pawl includes a cylindrical body, a rear end of the body being fixed to the rotating shaft, a front end of the body being provided with the second spring and a tooth head; the second spring presses the tooth head to the inner ring gear.

The present invention has the following advantages: The structure is reasonable in layout, and the relative rotation in the axial direction is based on a damping force, which is helpful to decrease friction and reduce wear of the wire reel and the casting-out cover caused by a large impact force at the moment of wire casting-out, thus prolonging the service life of the automatic casting-out device. In addition, two kinds of casting-out structures are provided, which can provide more casting-out methods, avoiding the problem of improper matching caused by automatic casting-out, improving the practicability and working stability of the structure.

### BRIEF DESCRIPTION OF DRAWINGS

The present invention will be further described below with reference to drawings and examples.

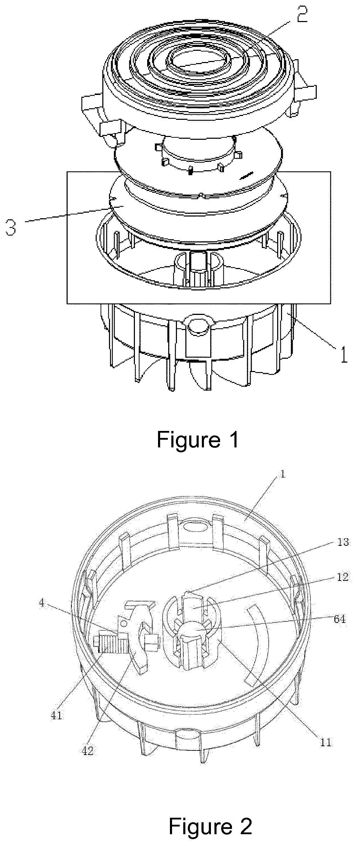

Figure 1 is an assembly diagram of a mower wire box;
Figure 2 shows the structure of an automatic take-up assembly in the wire box;

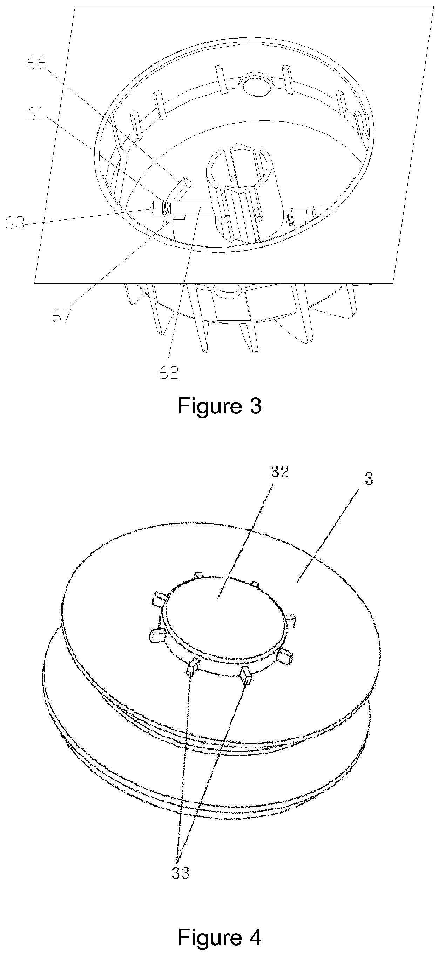

Figure 3 shows the structure of a manual take-up assembly in the wire box;
Figure 4 is an upper structure view of the wire reel;

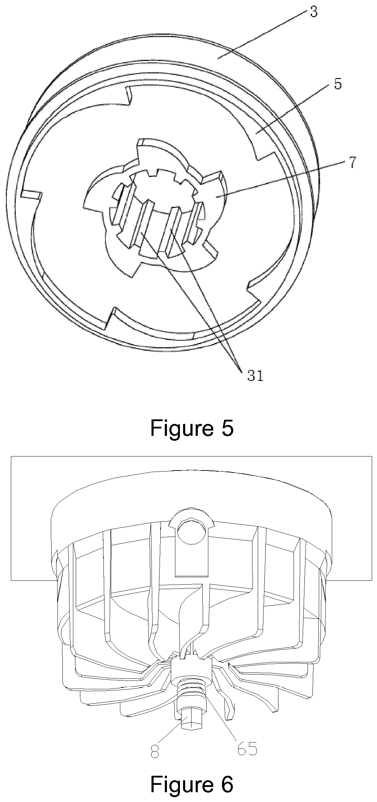

Figure 5 is a lower structure view of the wire reel; and
Figure 6 is a structural diagram of the bottom of the wire box.

List of reference numbers: 1. Wire box; 2. casting-out cover; 3. wire reel; 4. first pawl; 5. outer ring gear; 6. second pawl; 7. inner ring gear; 8. hexagonal surface; 11. supporting portion; 12. elastic rib; 21. convex ring; 31. second rib; 32. convex shaft; 33. auxiliary rib; 41. first spring; 42. claw; 61. second spring; 62. body; 63. tooth head; 64. rotating shaft; 65. torsion spring; 66. chute; and 67. protrusion.

### DETAILED DESCRIPTION OF PREFERRED EMBODIMENTS

Preferred embodiment of the present invention:
A mower wire box with a take-up structure is provided, comprising a wire box 1, a casting-out cover 2, and a wire reel 3 arranged in the wire box 1. The wire box 1 is provided inside with a supporting portion 11 for rotating support, with which the wire reel 3 is matched through its shaft hole. Based on this match, the wire reel 3 can rotate in the wire box 1.

A pair of elastic ribs 12, disposed on the peripheral wall of the supporting portion 11, is provided on the outer wall with a first rib 13 extending axially. A second rib 31 is disposed in the shaft hole of the wire reel 3. During casting-out, the elastic ribs 12 of the supporting portion 11 are spread out by the centrifugal force, and the first rib 13 of the elastic rib 12 frictionally cooperates with the second rib 31 in the shaft hole of the wire reel to form damping.

A convex shaft 32 is protruded from the lower end surface of the wire reel 3, and an auxiliary rib 33 is disposed on an outer circumferential surface of the convex shaft 32. Accordingly, a convex ring 21 corresponding to the convex shaft 32 is arranged in the casting-out cover 2, with the auxiliary rib 33 in contact with the upper end surface of the convex ring 21.

A ratchet assembly, arranged on the bottom surface of the wire box 1, can provide one-way rotation locking for the wire reel. The ratchet assembly is divided into an automatic casting-out assembly and a manual casting-out assembly, the automatic casting-out assembly being based on the cooperation of the damping force and the ratchet, the manual casting-out assembly being realized by the mechanical transmission of the ratchet.

The wire reel 3 is provided with an inner ring gear 7 and an outer ring gear 5 in coaxial relationship. The automatic casting-out assembly includes a first spring 41 that presses a first pawl 4 to the outer ring gear 5, and the manual casting-out assembly includes a second spring 61 that presses a second pawl 6 to the inner ring gear 7.

The first pawl 4 includes a curved claw 42. The first spring 41, fixed on the bottom surface of the wire box 1, presses the claw 42 to the outer ring gear 5. When the cutting line becomes shorter due to wear, the mowing resistance is reduced, the motor speed is increased, and the corresponding centrifugal force is also increased. Under the action of the centrifugal force, the claw overcomes the elastic force of the first spring 41 to leave the ratchet, while the wire reel will automatically rotate by one tooth under the pull of the centrifugal force of the cutting line, so that the cutting line is extended to ensure the working length thereof.

The second pawl 6, having a linear telescopic structure, includes a cylindrical body 62. The rear end of the body 62 is fixed to the rotating shaft 64, and the front end of the body 62 is fitted with a second spring 61 and a tooth head 63, with the second spring 61 pressing the tooth head 63 against the surface of the inner ring gear 7. As the surface of the inner ring gear changes, the tooth head 63 can be retracted under the deformation of the second spring 61 so as to pass over each tooth-surface highest point in the inner ring gear 9.

A rotating shaft 64 is fitted in the central shaft hole of the supporting portion 11, and a rear end of the second pawl 6 is connected to the rotating surface of the rotating shaft. A torsion spring 65 is disposed between the rotating shaft 64 and the central shaft hole. A curved chute 66, whose length is greater than a single pitch of the inner ring gear, is arranged on the bottom surface of the wire box 1. A protrusion 67 matched with the chute is disposed on the second pawl 6. When the automatic casting-out structure cannot work properly, the second pawl 6 can be driven to shift by the rotating shaft 64 that is rotated. Since the rotation angle of the second pawl 6 is limited, the second pawl 6 can only rotate by one inner pitch. Then, with the torsion spring 65 reset, the wire reel can be rotated forward by one inner pitch to achieve the effect of manual casting-out.

The end of the rotating shaft 64 is located outside the wire box 1, and a hexagonal surface 8 is provided on the end of the rotating shaft to fit a manual wrench. The rotational position of the second pawl can be adjusted by a manual wrench. When the second pawl passes over one tooth, it will return to the original position under the action of the torsion spring, so the wire reel can be rotated for casting-out forward.

The above-described embodiment, not intended to limit the present invention, is merely illustrative of the principles and effects of the present invention.

## Claims

1. A mower wire box with a take-up structure, comprising a wire box (1) and a wire reel (3) arranged in the wire box (1), the wire box (1) being provided inside with a supporting portion (11) for rotating support, the wire reel (3) being matched with the supporting portion (11) through its shaft hole, a ratchet assembly being arranged between the wire reel (3) and the wire box (1),
wherein the ratchet assembly comprises an automatic casting-out assembly and a manual casting-out assembly;
wherein the wire reel (3) is provided with an inner ring gear (7) and an outer ring gear (5) in coaxial relationship;
wherein the automatic casting-out assembly includes a first spring (41) that presses a first pawl (4) to the outer ring gear (5), and the manual casting-out assembly includes a second spring (61) that presses a second pawl (6) to the inner ring gear (7);
wherein a rotating shaft (64) is fitted in the central shaft hole of the supporting portion (11), and a rear end of the second pawl (6) is connected to the rotating surface of the rotating shaft (64);
wherein a torsion spring (65) is disposed between the rotating shaft (64) and the central shaft hole;
wherein a curved chute (66), whose length is greater than a single pitch of the inner ring gear (7), is arranged on the bottom surface of the wire box (1);
wherein a protrusion (67) matched with the chute (66) is disposed on the second pawl (6); the end of the rotating shaft is located outside the wire box (1), and a hexagonal surface (8) is provided on the end of the rotating shaft to fit a manual wrench,
**characterized in that:**
the second pawl (6) includes a cylindrical body (62), a rear end of the body (62) being fixed to the rotating shaft, a front end of the body (62) being provided with the second spring (61) and a tooth head (63); the second spring (61) presses the tooth head (63) to the inner ring gear (7).

2. The mower wire box with a take-up structure according to claim 1, wherein the first pawl (4) includes a curved claw (42); the first spring (41), fixed on the bottom surface of the wire box (1), presses the claw (42) to the outer ring gear (5).

3. The mower wire box with a take-up structure according to claim 2, wherein a pair of elastic ribs (12), disposed on the peripheral wall of the supporting portion (11), is provided on the outer wall with a first rib (13) extending axially; a second rib (31) is disposed in the shaft hole of the wire reel (3); the elastic ribs (12) are spread out by the centrifugal force, and the first rib (13) and the second rib (31) frictionally cooperate to form damping to achieve stable casting-out.

4. The mower wire box with a take-up structure according to claim 3, wherein a convex shaft (32) is protruded from a lower end surface of the wire reel (3), and an auxiliary rib (33) is disposed on an outer circumferential surface of the convex shaft (32).

5. The mower wire box with a take-up structure according to claim 4, wherein the wire box (1) is provided with a casting-out cover (2), which is provided inside with a convex ring (21) corresponding to the convex shaft (32), with the auxiliary rib (33) in contact with the upper end surface of the convex ring (21).

## Patentansprüche

1. Rasenmäherdrahtkasten mit einer Aufnahmestruktur, umfassend einen Drahtkasten (1) und eine Drahtspule (3), die in dem Drahtkasten (1) angeordnet ist, wobei der Drahtkasten (1) im Inneren mit einem Lagerungsabschnitt (11) für eine Drehlagerung versehen ist, wobei die Drahtspule (3) mit dem Lagerungsabschnitt (11) durch ihre Wellenöffnung abgestimmt ist, wobei eine Sperranordnung zwischen der Drahtspule (3) und dem Drahtkasten (1) angeordnet ist,
wobei die Sperranordnung eine automatische Auswurfanordnung und eine manuelle Auswurfanordnung umfasst;
wobei die Drahtspule (3) mit einem inneren Ringrad (7) und einem äußeren Ringrad (5) in koaxialer Beziehung versehen ist;
wobei die automatische Auswurfanordnung eine erste Feder (41) umfasst, die eine erste Klinke (4) an das äußere Ringrad (5) drückt, und die manuelle Auswurfanordnung eine zweite Feder (61) umfasst, die eine zweite Klinke (6) an das innere Ringrad (7) drückt;
wobei eine sich drehende Welle (64) in die mittige Wellenöffnung des Lagerungsabschnitts (11) eingepasst ist und ein hinteres Ende der zweiten Klinke (6) mit der sich drehenden Fläche der sich drehenden Welle (64) verbunden ist;
wobei eine Torsionsfeder (65) zwischen der sich drehenden Welle (64) und der mittigen Wellenöffnung angeordnet ist;
wobei eine gebogene Rinne (66), deren Länge größer als eine einzelne Teilung des inneren Ringrads (7) ist, an der unteren Fläche des Drahtkastens (1) angeordnet ist;
wobei ein Vorsprung (67), der mit der Rinne (66) abgestimmt ist, an der zweiten Klinke (6) angeordnet ist; wobei sich das Ende der sich drehenden Welle außerhalb des Drahtkastens (1) befindet und eine hexagonale Fläche (8) an dem Ende der sich drehenden Welle so bereitgestellt ist, dass sie zu einem manuellen Schraubenschlüssel passt,
**dadurch gekennzeichnet, dass**:
die zweite Klinke (6) einen zylindrischen Körper (62) umfasst, ein hinteres Ende des Körpers (62) an der sich drehenden Welle fixiert ist, ein vorderes Ende des Körpers (62) mit der zweiten Feder (61) und einem Zahnkopf (63) versehen ist; wobei die zweite Feder (61) den Zahnkopf (63) an das innere Ringrad (7) drückt.

2. Rasenmäherdrahtkasten mit einer Aufnahmestruktur nach Anspruch 1, wobei die erste Klinke (4) eine gebogene Klaue (42) umfasst; wobei die erste Feder (41), die an der unteren Fläche des Drahtkastens (1) fixiert ist, die Klaue (42) an das äußere Ringrad (5) drückt.

3. Rasenmäherdrahtkasten mit einer Aufnahmestruktur nach Anspruch 2, wobei ein Paar von elastischen Rippen (12), das an der Umfangswand des Lagerungsabschnitts (11) angeordnet ist, an der Außenwand bereitgestellt ist, wobei sich eine erste Rippe (13) axial erstreckt; eine zweite Rippe (31) in der Wellenöffnung der Drahtspule (3) angeordnet ist; die elastischen Rippen (12) durch die Zentrifugalkraft auseinandergespreizt werden und die erste Rippe (13) und die zweite Rippe (31) reibschlüssig zusammenwirken, um eine Dämpfung auszubilden, um einen gleichbleibenden Auswurf zu erzielen.

4. Rasenmäherdrahtkasten mit einer Aufnahmestruktur nach Anspruch 3, wobei eine konvexe Welle (32) aus einer unteren Endfläche der Drahtspule (3) ragt und eine zusätzliche Rippe (33) an einer Außenumfangsfläche der konvexen Welle (32) angeordnet ist.

5. Rasenmäherdrahtkasten mit einer Aufnahmestruktur nach Anspruch 4, wobei der Drahtkasten (1) mit einer Auswurfabdeckung (2) versehen ist, die im Inneren mit einem konvexen Ring (21) versehen ist, der der konvexen Welle (32) entspricht, wobei die zusätzliche Rippe (33) in Kontakt mit der oberen Endfläche des konvexen Rings (21) ist.

## Revendications

1. Boîte de fils de tondeuse avec une structure d'enroulement, comprenant une boîte de fils (1) et un dévidoir (3) agencé dans la boîte de fils (1), la boîte de fils (1) étant placée à l'intérieur d'une partie de support (11) pour un support rotatif, le dévidoir (3) étant mis en correspondance avec la partie de support (11) par l'intermédiaire de son trou d'arbre, un ensemble rochet étant disposé entre le dévidoir (3) et la boîte de fils (1),
dans laquelle l'ensemble rochet comprend un ensemble d'expulsion automatique et un ensemble d'expulsion manuel ;
dans laquelle le dévidoir (3) est muni d'une couronne interne (7) et d'une couronne externe (5) en relation coaxiale ;
dans laquelle l'ensemble d'expulsion automatique comprend un premier ressort (41) qui presse un premier cliquet (4) sur la couronne externe (5), et l'ensemble d'expulsion manuel comprend un second ressort (61) qui presse un second cliquet (6) sur la couronne interne (7) ;
dans laquelle un arbre rotatif (64) est fixé dans le trou d'arbre central de la partie de support (11), et une extrémité arrière du second cliquet (6) est reliée à la surface de rotation de l'arbre rotatif (64) ;
dans laquelle un ressort de torsion (65) est disposé entre l'arbre rotatif (64) et le trou d'arbre central ;
dans laquelle une goulotte incurvée (66), dont la longueur est supérieure à un pas unique de la couronne interne (7) est disposée sur la surface inférieure de la boîte de fils (1) ;
dans laquelle une saillie (67) correspondant à la goulotte (66) est disposée sur le second cliquet (6) ; l'extrémité de l'arbre rotatif est située à l'extérieur de la boîte de fils (1), et une surface hexagonale (8) est placée sur l'extrémité de l'arbre rotatif pour fixer une clé manuelle,
**caractérisée en ce que :**
le second cliquet (6) comprend un corps cylindrique (62), une extrémité arrière du corps (62) étant fixée à l'arbre rotatif, une extrémité avant du corps (62) étant munie du second ressort (61) et d'une tête de dent (63) ; le second ressort (61) appuie la tête de dent (63) sur la couronne interne (7).

2. Boîte de fils de tondeuse avec une structure d'enroulement selon la revendication 1, dans laquelle le premier cliquet (4) comprend une griffe incurvée (42) ; le premier ressort (41), fixé sur la surface inférieure de la boîte de fils (1), appuie la griffe (42) sur la couronne externe (5).

3. Boîte de fils de tondeuse avec une structure d'enroulement selon la revendication 2, dans laquelle une paire de nervures élastiques (12), disposée sur la paroi périphérique de la partie de support (11), est munie sur la paroi externe d'une première nervure (13) s'étendant axialement ; une seconde nervure (31) est disposée dans le trou d'arbre du dévidoir (3) ; les nervures élastiques (12), sont écartées par la force centrifuge, et la première nervure (13) et la seconde nervure (31) coopèrent en frottement pour former un amortissement pour obtenir une expulsion stable.

4. Boîte de fils de tondeuse avec une structure d'enroulement selon la revendication 3, dans laquelle un arbre convexe (32) fait saillie depuis une surface d'extrémité inférieure du dévidoir (3), et une nervure auxiliaire (33) est disposée sur une surface circonférentielle externe de l'arbre convexe (32).

5. Boîte de fils de tondeuse avec une structure d'enroulement selon la revendication 4, dans laquelle la boîte de fils (1) est munie d'un couvercle d'expulsion (2), qui est placé à l'intérieur d'une bague convexe (21) correspondant à l'arbre convexe (32), la nervure auxiliaire (33) étant en contact avec la surface d'extrémité supérieure de la bague convexe (21).
